## Europäisches Patentamt

## European Patent Office

## Office européen des brevets

(19)

(11) Veröffentlichungsnummer: **0 130 474**
**B1**

(12) ## EUROPÄISCHE PATENTSCHRIFT

(45) Veröffentlichungstag der Patentschrift:
**03.06.87**

(51) Int. Cl.⁴: **G 01 V 9/00**

(21) Anmeldenummer: **84107054.3**

(22) Anmeldetag: **19.06.84**

(54) Verfahren zur Abschwächung der Wirkung von Magnetfelden und Gerät zur Durchführung des Verfahrens sowie dessen Verwendung.

(30) Priorität: **22.06.83 DE 3322396**

(43) Veröffentlichungstag der Anmeldung:
**09.01.85 Patentblatt 85/2**

(45) Bekanntmachung des Hinweises auf die Patenterteilung:
**03.06.87 Patentblatt 87/23**

(84) Benannte Vertragsstaaten:
**AT BE CH DE FR GB IT LI LU NL SE**

(56) Entgegenhaltungen:
GB - A - 683 173
GB - A - 2 090 309
US - A - 3 867 710

RADIO MARKT BEILAGE ZUR ELEKTRO TECHNIK,
Band 37, Nr. 44/45, 5. November 1955, Seiten 391-392; G.
ROSE: "Hochfrequenztechnik und "Erdstrahlen"
RADIO-MARKT, BEILAGE IN DER
"ELEKTRO-TECHNIK", 7. Dezember 1952, Coburg, DE;
V. FRITSCH: "Erdstrahlen"
RAPPORT VAN DE COMMISSIE TOT ONDERZOEK VAN
HET WICHELROEDE- EN AARDSTRALENPROBLEEM.
OVERGENOMEN UIT HET VERSLAG VAN DE GEWONE
VERGADERING DER AFDELING NATUURKUNDE VAN
ZATERDAG 20 MAART 1954, DI LXIIINo 3., Seiten 52-85,
Koninklijke Nederlandse Akademie van

(73) Patentinhaber: **Schmid, Albert,
D-8251 Wasentegernbach (DE)**

(72) Erfinder: **Schmid, Albert, D-8251 Wasentegernbach (DE)**

(74) Vertreter: **Seidei, Herta, Dipl.-Phys., D-8267 Lohkirchen
Lkrs. Mühldorf/Inn (DE)**

(56) Entgegenhaltungen: (Fortsetzung)
**Wetenschappen, N.V. Noord Hollandsche Uitg
PROKOP/WINNER: "WÜNSCHELRUTE,
ERDSTRAHLEN, RADIÄSTHESIE - DIE OKKULTEN
STRAHLENFÜHLIGKEITSLEHREN IM LICHTE DER
WISSENSCHAFT", F. ENKE-VERLAG, STUTTGART 1977**

# Beschreibung

Die Erfindung betrifft ein Verfahren zur Abschwächung der Wirkung von Magnetfeldern, sowie ein Gerät zur Durchführung des Verfahrens.

Der Erfinder hat sich die Aufgabe gestellt, mit Hilfe von pulsierendem Gleichstrom ein Verfahren sowie ein Gerät zur Durchführung des Verfahrens zu entwickeln, welches es ermöglicht, die Wirkung von Magnetfeldern abzuschwächen.

Das erfindungsgemässe Verfahren besteht darin, dass die Impulse mit einer Frequenz im Bereich von 1 bis 10000 Hz, vorzugsweise mit einer Frequenz von ca. 3000 Hz, kontinuierlich in den Bereich der Erdoberfläche und die sich daran anschliessende Atmosphäre ausgestrahlt werden. Vorzugsweise wird eine Frequenz von ca. 1 bis 500 Hz gewählt.

Es hat sich ferner als vorteilhaft erwiesen, eine Frequenz im Frequenzbereich von 1 bis 500 Hz, vorzugsweise 1 bis 50 Hz, einer Frequenz im Bereich von 1000 bis 5000 Hz, vorzugsweise 3000 Hz zu überlagern. Das zur Durchführung dieses Verfahrens dienende Gerät umfasst einen Sender für die Erzeugung eines pulsierenden, positiven Gleichstroms und ist dadurch gekennzeichnet, dass seine Antenne die Impulse einer Frequenz im Bereich von 1 bis 10000 Hz, vorzugsweise einer Frequenz von 1 bis 500 Hz, insbesondere vorzugsweise zwischen 1 und 50 Hz und/oder einer Frequenz von 1000 bis 5000 Hz, vorzugsweise ca. 3000 Hz in den Bereich der Erdoberfläche und in die sich daran anschliessende Atmosphäre ausstrahlt. Es hat sich gezeigt, dass es mit Hilfe des erfindungsgemässen Verfahrens und der Anwendung des erfindungsgemässen Gerätes gelingt, die Wirkung von Magnetfeldern abzuschwächen. Durch die fortwährende Aussendung der positiven Pulse gelingt es, einen Flächenbereich von ca. 20000 m² mit der Strahlung zu erreichen.

Es ist aber auch daran zu denken, dass das Verfahren in Kombination mit Richtstrahlern anwendbar ist, um geeignete Objekte, ggf. auch auf grössere Entfernungen, gezielt zu erreichen und diesen die Vorteile der Erfindung zukommen zu lassen.

Es sind in der Zwischenzeit bereits Geräte bekannt geworden, die zur Strahlenableitung dienen sollen, doch bei diesen Geräten hat es sich gezeigt, dass sie bereits nach zwei bis drei Tagen keine Wirkung mehr ausüben und darüberhinaus nicht nur unwirksam sind, sondern sogar mitschwingen. Durch die fortwährende Ausstrahlung der positiven Pulse, entsprechend dem erfindungsgemässen Verfahren, kann ein Unwirksamwerden der Abschirmung nicht mehr eintreten.

Einzelheiten der Erfindung ergeben sich aus der nachstehenden Beschreibung des Gerätes anhand seines Schaltschemas.

Das Abschirmgerät 1 ist bei 2 an eine Schukosteckdose (nicht dargestellt) mit 220 Volt Wechselspannung anschliessbar. Über eine Sicherung 3, einen Kondensator 3a von 0,47 µF und 1000 V sowie einen Netz-Trenntransformator 4 ist ein Gleichrichter 5 herkömmlicher Bauart angeschlossen. Der Gleichrichter 5 umfasst einen Gleichrichter 6 von 2,2 A, 40 V, einen Kondensator 7 von 1000 µF und 16 V, einen Widerstand 8 von 430 Ω, 1/2 W sowie ein Einstellpotentiometer 9 von 50 Ω, 1/2 W, die mit einem Transistor 10 BD 246 und einem Widerstand 11 von 3,6 Ω, 1/2 W verbunden sind. Über einen Elektrolytkondensator 12 von 1000 µF, 16 V ist der eigentliche Senderteil 13 angeschlossen. Es handelt sich bei diesem Sender 13 um eine herkömmliche Schaltungsanordnung mit Transistoren und einen Schwingkreis, der im einzelnen aus folgenden Bauelementen besteht: einem Widerstand 14 von 270 Ω und 1/2 W, einem Widerstand 15 von 100 Ω und 1/2 W, einem Transistor 16 BD 238, einem weiteren Transistor 17 BD 246. Der Transistor 16 ist mit einem Steuertrafo 18 M42 42/15 W verbunden, der von einem Elektrolytkondensator 19 von 0,64 µF und 60 V überbrückt ist. Der Transistor 17 ist über einen weiteren Elektrolytkondensator 20 von 0,64 µF und 60 V mit der Sendeantenne 21 in Form einer Spule von 228 Windungen aus einem Kupferdraht von 0,8 mm Durchmesser verbunden. Zwischen der Sendeantenne 21 und dem Sendegerät 13 ist eine Abschirmung 22 aus Kupferblech von 0,1 mm Stärke vorgesehen. Eine Kontrollwicklung 23 aus einer Kupferlitze 228 W und Ø 0,45 ist über eine Diode 24 BY 133 mit einer Kontrollampe 25 verbunden, um die Funktionsfähigkeit des eingeschalteten Gerätes 13 ständig überprüfen zu können.

Die von dem Sender ausgesandte Frequenz der positiven Pulse beträgt bei einer Leistungsaufnahme von 8 W 3 kHz. Die Betriebsspannung beträgt 190 bis 240 V Wechselstrom und 50 Hz bzw. 12 V Gleichspannung. Selbstverständlich kann die Leistung des Senders beliebig variiert werden. Die Reichweite der elektromagnetischen Pulse beträgt ca. 100 m im Umkreis.

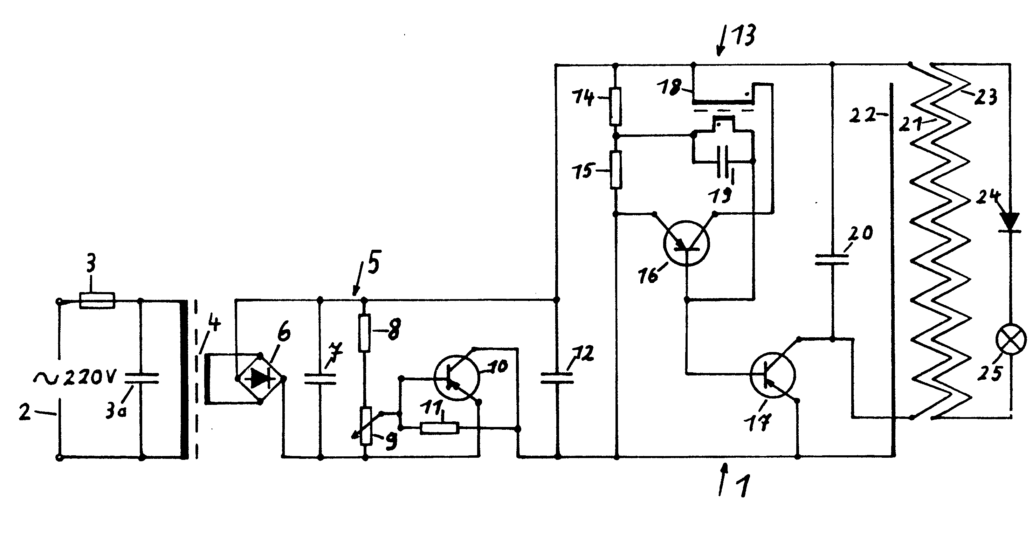

## Patentansprüche

1. Verfahren zur Abschwächung der Wirkung von Magnetfeldern mit Hilfe von pulsierendem Gleichstrom, dadurch gekennzeichnet, dass die Impulse mit einer Frequenz im Bereich von 1 bis 10000 Hz, vorzugsweise mit einer Frequenz von ca. 3000 Hz, kontinuierlich in den Bereich der Erdoberfläche und die sich daran anschliessende Atmosphäre ausgestrahlt werden.

2. Verfahren nach Anspruch 1, dadurch gekennzeichnet, dass eine Frequenz von ca. 1 bis 500 Hz gewählt wird.

3. Verfahren nach einem der vorhergehenden Ansprüche, dadurch gekennzeichnet, dass eine Frequenz im Frequenzbereich von 1 bis 500 Hz, vorzugsweise 1 bis 50 Hz einer Frequenz im Bereich von 1000 bis 5000 Hz, vorzugsweise 3000 Hz, überlagert wird.

4. Gerät zur Durchführung des Verfahrens nach einem der Ansprüche 1 bis 3, mit einem Sender für die Erzeugung von pulsierendem Gleichstrom, dadurch gekennzeichnet, dass die Antenne (21) des Senders (13) die Impulse einer Frequenz im Bereich von 1 bis 10000 Hz, vorzugsweise einer Frequenz von 1 bis 500 Hz, insbesondere vorzugsweise zwischen 1 und 50 Hz und/oder einer Frequenz von 1000 bis 5000 Hz, vorzugsweise ca. 3000 Hz, in den Bereich der Erdoberfläche und in die sich daran anschliessende Atmosphäre ausstrahlt.

5. Gerät nach Anspruch 4, dadurch gekennzeichnet, dass der Sender (13) mit einem Gleichrichter (5) verbunden ist, der in an sich bekannter Weise über einen Netztransformator (4) an eine 50 Hz-Wechselstromquelle (2) anschliessbar ist.

6. Gerät nach Anspruch 4 oder 5, dadurch gekennzeichnet, dass die Antenne (21) in Form einer Spule ausgebildet ist.

7. Gerät nach einem der vorhergehenden Ansprüche, dadurch gekennzeichnet, dass die Funktion des Gerätes (1) durch eine mit der Kontrolllampe (25) verbundene Prüfspule (23) überprüfbar ist.

8. Gerät nach einem der vorhergehenden Ansprüche, dadurch gekennzeichnet, dass die Leistung des Senders (13) beliebig veränderbar ist und vorzugsweise acht Watt beträgt.

9. Verwendung eines Gerätes nach einem der Ansprüche 4 bis 8, dadurch gekennzeichnet, dass es in Faraday'schen Käfigen (Fahrzeugkabinen, Flugzeug oder dergleichen) zur Erzeugung eines Ersatzmagnetfeldes eingebaut wird.

10. Verwendung eines Gerätes nach einem der Ansprüche 4 bis 8, dadurch gekennzeichnet, dass das Gerät in Verbindung mit Richtstrahlern verwendet wird, um das erzeugte Magnetfeld in gebündelter, gezielter Form einem entfernten Objekt zuzuführen.

## Claims

1. A method of attenuating the effect of magnetic fields by means of pulsating direct current, characterised in that the pulses are emitted continuously, at a frequency in the range from 1 to 10,000 Hz, preferably at a frequency of about 3,000 Hz, in the region of the surface of the earth and the atmosphere adjacent thereto.

2. A method as claimed in claim 1, characterised in that a frequency of about 1 to 500 Hz is selected.

3. A method as claimed in any one of the preceding claims, characterised in that a frequency range from 1 to 500 Hz, preferably 1 to 50 Hz is superimposed on a frequency in the range from 1,000 to 5,000 Hz, preferably 3,000 Hz.

4. A device for carrying out the method as claimed in any one of claims 1 to 3, having a transmitter for generating pulsating direct current, characterised in that the aerial (21) of the transmitter (13) radiates the pulses of a frequency in the range from 1 to 10,000 Hz, preferably a frequency of 1 to 500 Hz, particularly preferably between 1 and 50 Hz and/or a frequency of 1,000 to 5,000 Hz, preferably about 3,000 Hz, in the region of the surface of the earth and into the atmosphere adjacent thereto.

5. A device as claimed in claim 4, characterised in that the transmitter (13) is connected to a rectifier (5) which can be connected to a 50 Hz alternating-current source (2) in a manner known per se, through a mains transformer (4).

6. A device as claimed in claim 4 or 5, characterised in that the aerial (21) is constructed in the form of a coil.

7. A device as claimed in any one of the preceding claims, characterised in that the operation of the device (1) can be checked by a test coil (23) connected to the signal lamp (25).

8. A device as claimed in any one of the preceding claims, characterised in that the power of the transmitter (13) can be varied as desired and is preferably eight watts.

9. The use of a device as claimed in any one of claims 4 to 8, characterised in that it is installed in Faraday cages (vehicle compartments, aircraft or the like) to produce a substitute magnetic field.

10. The use of a device as claimed in any one of claims 4 to 8, characterised in that the device is used in conjunction with directional transmitters in order to supply the magnetic field produced, in a focused, aimed form, to a remote object.

## Revendications

1. Procédé pour atténuer l'effet de champs magnétiques à l'aide d'un courant redressé pulsatoire, caractérisé en ce que les impulsions sont émises, avec une fréquence de la plage allant de 1 à 10 000 Hz, de préférence avec une fréquence d'environ 3000 Hz, en continu au voisinage de la surface du sol et de l'atmosphère qui s'y raccorde.

2. Procédé selon la revendication 1, caractérisé en ce que l'on choisi une fréquence d'environ 1 à 500 Hz.

3. Procédé selon l'une des revendications précédentes, caractérisé en ce que l'on superpose une fréquence de la plage allant de 1 à 500 Hz, de préférence 1 à 50 Hz, à une fréquence de la plage allant de 1000 à 5000 Hz, de préférence 3000 Hz.

4. Appareil pour l'exécution du procédé selon l'une des revendications 1 à 3, comportant un émetteur pour produire un courant redressé pulsatoire, caractérisé en ce que l'antenne (21) de l'émetteur (13) émet les impulsions d'une fréquence de la plage allant de 1 à 10000 Hz, de préférence d'une fréquence de 1 à 500 Hz, en particulier de préférence entre 1 et 50 Hz et/ou une fréquence de 1000 à 5000 Hz, de préférence environ 3000 Hz, au voisinage de la surface du sol et dans l'atmosphère qui s'y raccorde.

5. Appareil selon la revendication 4, caractérisé en ce que l'émetteur (13) est relié à un redresseur (5) qui peut se raccorder, de façon connue en soi, par l'intermédiaire d'un transformateur de réseau (4), à une source de courant alternatif 50 Hz (2).

6. Appareil selon la revendication 4 ou 5, caractérisé en ce que l'antenne (21) est conçue sous forme d'une bobine.

7. Appareil selon l'une des revendications précédentes, caractérisé en ce que l'on peut contrôler le fonctionnement de l'appareil (1) au moyen d'une bobine de contrôle (23) reliée à une lampe de contrôle (25).

8. Appareil selon l'une des revendications précédentes, caractérisé en ce que l'on peut modifier à volonté la puissance de l'émetteur (13) qui, de préférence, atteint huit watts.

9. Utilisation d'un appareil selon l'une des revendications 4 à 8, caractérisé en ce qu'il est monté dans une cage de Faraday (cabine de véhicule, avion ou analogue) pour produire un champ magnétique de remplacement.

10. Utilisation d'un appareil selon l'une des revendications 4 à 8, caractérisé en ce que l'on utilise l'appareil en liaison avec des émetteurs directifs pour amener le champ magnétique produit, sous la forme visée d'un faisceau, à un objet éloigné.

0130474